# EUROPÄISCHE PATENTSCHRIFT

(11) **EP 2 340 425 B1**
(45) Veröffentlichungstag und Bekanntmachung des Hinweises auf die Patenterteilung: **10.10.2012**
(21) Anmeldenummer: 09782133.4
(22) Anmeldetag: 25.08.2009
(51) Int. Cl.: G01L 7/08, G01L 9/00

(54) **VERFAHREN ZUR HERSTELLUNG VON HOCHDRUCKSENSOREN**
METHOD FOR PRODUCING HIGH-PRESSURE SENSORS
PROCÉDÉ DE FABRICATION DE CAPTEURS HAUTE PRESSION

(30) Priorität: 21.10.2008 DE 102008042982
(43) Veröffentlichungstag der Anmeldung: 06.07.2011
(73) Patentinhaber: Robert Bosch GmbH, 70442 Stuttgart (DE)
(72) Erfinder: HENNING, Frank, 72770 Reutlingen (DE); FREY, Wilhelm, 70178 Stuttgart (DE)
(86) Internationale Anmeldenummer: PCT/EP2009/060896
(87) Internationale Veröffentlichungsnummer: WO 2010/046157

(56) Entgegenhaltungen:
- EP-A- 1 619 488
- DE-A1- 19 934 114
- US-A- 5 255 427
- US-A- 5 867 886
- US-A1- 2002 152 817
- US-A1- 2005 000 292

## Beschreibung

### Stand der Technik

Die Erfindung betrifft ein Verfahren zur Herstellung von Hochdrucksensoren mit einem Sensorelement zur Druckerfassung und mit einem Anschlussstück zur Ankopplung des Sensorelements an ein Messsystem. Im Grundkörper des Sensorelements wird eine Membran ausgebildet und im Grundkörper des Anschlussstücks ein Druckkanal. Das Sensorelement wird so auf dem Anschlussstück montiert, dass die Membran über den Druckkanal mit dem Messdruck beaufschlagbar ist.

Aus der Praxis sind verschiedene Konzepte zum Aufbau von Hochdrucksensoren mit einem Sensorelement und einem Anschlussstück bekannt. Ein Verfahren zur Herstellung eines Drucksensors wird in US 2005/0000292 vorgeschlagen.
Üblicherweise werden diese beiden Komponenten unabhängig voneinander aus einem metallischen Grundkörper gefertigt. Im Falle des Sensorelements wird der Grundkörper mit einer Sacköffnung versehen, um eine Membran in der gegenüberliegenden Oberfläche des Grundkörpers freizulegen. Auf dieser Oberfläche werden Schaltungselemente zur Signalerfassung angeordnet, wozu beispielsweise Verfahren der Halbleitertechnik eingesetzt werden. Im Grundkörper des Anschlussstücks wird ein Druckkanal ausgebildet. Außerdem kann das Anschlussstück beispielsweise noch mit einem Gewinde zur Ankopplung an das Messsystem versehen werden. Das Sensorelement wird dann so auf dem Anschlussstück montiert, dass die rückwärtige Sacköffnung des Sensorelements fluchtend zum Druckkanal im Anschlussstück angeordnet ist.

Diese Montage des Sensorelements auf dem Anschlussstück erweist sich in der Praxis als problematisch.
Aus Kostengründen wird das Sensorelement meist mit dem Anschlussstück verschweißt. Dabei muss darauf geachtet werden, dass weder der Druckkanal im Anschlussstück noch die Sacköffnung des Sensorelements verschlossen, verschmutzt oder ungünstig deformiert werden, was die Herstellung einer Schweißverbindung mit reproduzierbaren mechanischen Eigenschaften erschwert. Die Druckfestigkeit der Schweißverbindung wird durch die Geometrie der Schweißnaht und der Kontaktflächen zum Sensorelement und zum Anschlussstück beeinflusst. Kerben oder Vertiefungen in der Schweißverbindung bilden bei hohen Druckbelastungen, insbesondere bei Pulsationsbelastungen, Ausgangspunkte für Risse. Der Anwendungsbereich derartiger Hochdrucksensoren ist daher typischerweise auf Druckbereiche kleiner 2200bar limitiert.
Zuverlässiger als eine Schweißverbindung zwischen dem Sensorelement und dem Anschlussstück sind Klemmverbindungen. Diese eignen sich auch für den Einsatz bei Drücken größer 10000bar. Allerdings sind die damit verbundenen Kosten sehr hoch, so dass diese Aufbau- und Verbindungstechnik nur in Kleinstserien für Spezialapplikationen zur Anwendung kommt.

Das Sensorelement und das Anschlussstück können auch einteilig aus einem metallischen Grundkörper hergestellt werden. In diesem Fall können die Schaltungselemente zur Signalerfassung aber aufgrund der Bauteilgröße nicht ohne weiteres mit Verfahren der Halbleitertechnik auf die Sensormembran aufgebracht werden.

### Offenbarung der Erfindung

Mit der vorliegenden Erfindung wird ein Aufbaukonzept für Hochdrucksensoren vorgeschlagen, das eine einfache und kostengünstige Herstellung von zuverlässigen Hochdrucksensoren auch für Druckbereiche größer 2200bar ermöglicht.

Dies wird erfindungsgemäß dadurch erreicht, dass der Grundkörper des Sensorelements auf dem Grundkörper des Anschlussstücks montiert wird, wobei eine ganzflächige Verbindung zwischen den Montageflächen der beiden Grundkörper erzeugt wird. Erst danach wird der Druckkanal im Anschlussstück ausgebildet und die Membran des Sensorelements freigelegt.

Erfindungsgemäß ist nämlich erkannt worden, dass es in verfahrenstechnischer Hinsicht wesentlich einfacher ist, eine reproduzierbare, besonders druckfeste Schweißverbindung zwischen den Montageflächen der beiden Komponenten, Sensorelement und Anschlussstück, herzustellen, wenn keine Rücksicht auf die Durchlässigkeit eines Durchgangskanals genommen werden muss. Auch die Justierung der beiden Komponenten ist in diesem Fall sehr unkompliziert. Erfindungsgemäß werden der Druckkanal im Anschlussstück und die sich daran anschließende Sacköffnung im Sensorelement erst nachträglich in einem ggf. auch mehrstufigen Verfahren erzeugt. Dabei wird der Verbund aus Sensorelement und Anschlussstück vorteilhafterweise wie ein Werkstück behandelt.

In einer besonders vorteilhaften Variante des erfindungsgemäßen Verfahrens werden auf den Grundkörper des Sensorelements im Membranbereich Schaltungselemente zur Signalerfassung aufgebracht, bevor der Grundkörper des Sensorelements auf dem Grundkörper des Anschlussstücks montiert wird. Bei dieser Verfahrensvariante können die Schaltungselemente auch mit Techniken realisiert werden, die aufgrund der Abmessungen des Anschlussstücks nach der Montage nicht mehr ohne weiteres angewendet werden können, wie z. B. durch Anwendung von Halbleiterprozessen. Damit können die Schaltungselemente einfach in einem Dünnschichtaufbau mit mindestens einer biegeempfindlichen, d.h. z.B. piezoresistiven oder piezoelektrischen Schicht realisiert werden.

Im Rahmen des erfindungsgemäßen Verfahrens werden bevorzugt Sensorelemente und Anschlussstücke aus Stahl oder einer Stahllegierung verwendet. Ebenso können die beiden Komponenten des erfindungsgemäßen Drucksensoraufbaus in Form von Presslingen aus einem Sintermaterial realisiert werden. Bei diesen Materialien wird die ganzflächige Verbindung zwischen den beiden Grundkörpern vorteilhafterweise durch Schweißen hergestellt. Der Druckkanal im Anschlussstück und die Membran des Sensorelements können dann einfach mit einer geeigneten Technik, wie z.B. Elektropolieren, Bohren oder Fräsen, ausgebildet werden. Je nach Materialien der Grundkörper und der angestrebten Form des Druckanschlusses können hierfür auch verschiedene Verfahren kombiniert werden.

### Kurze Beschreibung der Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem unabhängigen Patentanspruch nachgeordneten Patentansprüche und andererseits auf die nachfolgende Beschreibung eines Ausführungsbeispiels der Erfindung anhand der Zeichnungen verwiesen.
- **Fig. 1**: zeigt eine schematische Schnittdarstellung durch den Grundkörper eines Sensorelements nach der Montage auf dem Grundkörper eines Anschlussstücks, und
- **Fig. 2**: zeigt eine schematische Schnittdarstellung durch den in Fig. 1 dargestellten Aufbau nach Einbringen eines Druckanschlusses und Ausbilden einer Membran.

### Ausführungsform der Erfindung

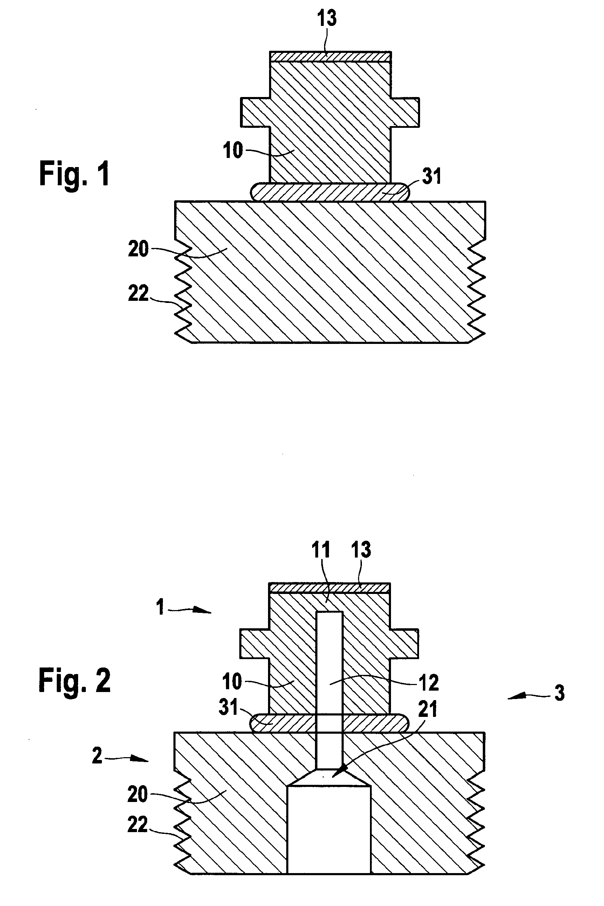

Die Figuren 1 und 2 veranschaulichen das erfindungsgemäße Verfahren zur Herstellung eines Hochdrucksensors 3 - wie er in Fig. 2 dargestellt ist - mit einem Sensorelement 1 zur Druckerfassung und mit einem Anschlussstück 2 zur Ankopplung des Sensorelements 1 an ein Messsystem. Erfindungsgemäß wird der Grundkörper 10 des Sensorelements 1 auf dem Grundkörper 20 des Anschlussstücks 2 montiert, bevor eine Membran 11 im Sensorelement 1 und ein geeigneter Druckanschluss in Form einer Sacköffnung 12 im Sensorelement 1 und eines sich daran anschließenden Druckkanals 21 im Anschlussstück 2 ausgebildet wird. Diese Strukturierung der beiden Grundkörper 10 und 20 erfolgt erst, nachdem eine ganzflächige Verbindung 31 zwischen den Montageflächen der beiden Grundkörper 10 und 20 hergestellt worden ist.

**Fig. 1** zeigt den Aufbau nach der Montage der beiden Grundkörper 10 und 20. Bei dem Grundkörper 10 des Sensorelements 1 handelt es sich um einen relativ dünnen metallischen Träger, auf dem vor der Montage mit Hilfe von Halbleiterprozessen ein Dünnschichtaufbau 13 erzeugt wurde. Dieser Dünnschichtaufbau 13 umfasst Schaltungselemente zur Signalerfassung, z.B. piezoresistiver, piezoelektrischer oder kapazitiver Art. Der Anschlussstück-Grundkörper 20 besteht ebenfalls aus einem metallischen Material, wie z.B. aus Stahl oder einer Stahllegierung. Im Rahmen einer Vorkonfektionierung wurde er mit einem Außengewinde 22 zur Ankopplung an ein Messsystem versehen. Die dem Dünnschichtaufbau 13 gegenüberliegende Oberfläche des Sensorelement-Grundkörpers 10 wurde ganzflächig mit der Montagefläche des Anschlussstück-Grundkörpers 20 verschweißt. Die resultierende vollflächige Schweißnaht 31 stellt eine sehr stabile und insbesondere druckfeste Verbindung dar.

**Fig. 2** veranschaulicht, dass die Membran 11 und der Druckanschluss 12, 21 erst nach der in Verbindung mit Fig. 1 näher erläuterten Montage freigelegt wurden. Im hier dargestellten Ausführungsbeispiel erfolgte dies in einem zweistufigen Bohrverfahren. Mit einem ersten Bohrer wurde in der Rückseite des Anschlussstück-Grundkörpers 20, d.h. in der der Montagefläche gegenüberliegenden Oberfläche, eine Bohrung erzeugt, die etwa drei Viertel des Druckkanals 21 bildet. Diese Bohrung wurde dann mit einem zweiten Bohrer kleineren Durchmessers bis über die Schweißnaht 31 in den Sensorelement-Grundkörper 10 fortgesetzt. Dabei wurde eine Sacköffnung 12 im Sensorelement-Grundkörper 10 erzeugt und die Membran 11 freigelegt.

## Patentansprüche

1. Verfahren zur Herstellung von Hochdrucksensoren (3) mit einem Sensorelement (1) zur Druckerfassung und mit einem Anschlussstück (2) zur Ankopplung des Sensorelements (1) an ein Messsystem,
- bei dem im Grundkörper (10) des Sensorelements (1) eine Membran (11) ausgebildet wird,
- bei dem im Grundkörper (20) des Anschlussstücks (2) ein Druckkanal (21) ausgebildet wird und
- bei dem das Sensorelement (1) auf dem Anschlussstück (2) montiert wird, so dass die Membran (11) über den Druckkanal (21) mit dem Messdruck beaufschlagbar ist,
der Grundkörper (10) des Sensorelements (1) auf dem Grundkörper (20) des Anschlussstücks (2) montiert wird, wobei eine ganzflächige Verbindung (31) zwischen den Montageflächen der beiden Grundkörper (10, 20) erzeugt wird, **dadurch gekennzeichnet dass** erst danach der Druckkanal (21) im Anschlussstück (2) ausgebildet wird und die Membran (11) des Sensorelements (1) freigelegt wird.

2. Verfahren nach Anspruch 1, **dadurch gekennzeichnet, dass** auf den Grundkörper (10) des Sensorelements (1) im Membranbereich ein Dünnschichtaufbau (13) mit Schaltungselementen zur Signalerfassung aufgebracht wird, bevor der Grundkörper (10) des Sensorelements (1) auf dem Grundkörper (20) des Anschlussstücks (2) montiert wird.

3. Verfahren nach einem der Ansprüche 1 oder 2, **dadurch gekennzeichnet, dass** das Sensorelement (1) und/oder das Anschlussstück (2) aus Stahl oder einer Stahllegierung hergestellt werden oder in Form eines Presslings aus einem Sintermaterial realisiert werden oder in einem umformenden Verfahren aus Bulk Metallic Glass hergestellt werden.

4. Verfahren nach einem der Ansprüche 1 bis 3, **dadurch gekennzeichnet, dass** die ganzflächige Verbindung (31) zwischen den beiden Grundkörpern (10, 20) durch Schweißen hergestellt wird.

5. Verfahren nach einem der Ansprüche 1 bis 4, **dadurch gekennzeichnet, dass** die Ausbildung des Druckkanals (21) im Anschlussstück (2) und das Freilegen der Membran (11) des Sensorelements (1) in einem mehrstufigen Verfahren erfolgt, insbesondere durch eine Kombination von verschiedenen Bohr - und/oder Fräsverfahren und/oder Elektropoliturverfahren.

## Claims

1. Method for producing high-pressure sensors (3) having a sensor element (1) for capturing a pressure and having a connection piece (2) for coupling the sensor element (1) to a measurement system,
- in which a diaphragm (11) is formed in the main body (10) of the sensor element (1),
- in which a pressure channel (21) is formed in the main body (20) of the connection piece (2), and
- in which the sensor element (1) is mounted on the connection piece (2) such that the measurement pressure can be applied, via the pressure channel (21), to the diaphragm (11),
wherein the main body (10) of the sensor element (1) is mounted on the main body (20) of the connection piece (2), wherein a full-area connection (31) between the mounting faces of the two main bodies (10, 20) is produced, **characterized in that** only afterwards the pressure channel (21) is formed in the connection piece (2) and the diaphragm (11) of the sensor element (1) is exposed.

2. Method according to Claim 1, **characterized in that** a thin-film construction (13) having switching elements for signal capturing is applied onto the main body (10) of the sensor element (1) in the diaphragm region before the main body (10) of the sensor element (1) is mounted on the main body (20) of the connection piece (2).

3. Method according to either of Claims 1 and 2, **characterized in that** the sensor element (1) and/or the connection piece (2) are manufactured from steel or a steel alloy or are realized from a sinter material in the form of a compact or are produced in a forming process from bulk metallic glass.

4. Method according to one of Claims 1 to 3, **characterized in that** the full-area connection (31) between the two main bodies (10, 20) is brought about by welding.

5. Method according to one of Claims 1 to 4, **characterized in that** the forming of the pressure channel (21) in the connection piece (2) and the exposing of the diaphragm (11) of the sensor element (1) take place in a multi-stage method, in particular by a combination of different drilling and/or milling methods and/or electropolishing methods.

## Revendications

1. Procédé de fabrication de sondes (3) de haute pression présentant un élément de sonde (1) qui saisit la pression et une pièce de raccordement (2) qui permet de raccorder l'élément de détection (1) à un système de mesure,
dans lequel une membrane (11) est formée dans le corps de base (10) de l'élément de sonde (1),
dans lequel un canal (21) de pression est formé dans le corps de base (20) de la pièce de raccordement (2) et
dans lequel l'élément de sonde (1) est monté sur la pièce de raccordement (2) de telle sorte que la pression de mesure puisse être appliquée sur la membrane (11) par l'intermédiaire du canal (21) de pression,
le corps de base (10) de l'élément de sonde (1) étant monté sur le corps de base (20) de la pièce de raccordement (2),
une liaison (31) étant formée sur la totalité des surfaces de montage des deux corps de base (10, 20), **caractérisé en ce que**
le canal (21) de pression n'est formé dans la pièce de raccordement (2) et la membrane (11) de l'élément de sonde (1) n'est libérée qu'après les étapes précédentes.

2. Procédé selon la revendication 1, **caractérisé en ce qu'**une structure (13) en couche mince présentant des éléments de circuit permettant de saisir les signaux est appliquée au niveau de la membrane du corps de base (10) de l'élément de sonde (1) avant que le corps de base (10) de l'élément de sonde (1) soit monté sur le corps de base (20) de la pièce de raccordement (2).

3. Procédé selon l'une des revendications 1 ou 2, **caractérisé en ce que** l'élément de sonde (1) et/ou la pièce de raccordement (2) sont formés d'acier ou d'un alliage d'acier, sont réalisés sous la forme d'une ébauche en matériau fritté ou sont fabriqués dans un procédé de façonnage de verre métallique en vrac.

4. Procédé selon l'une des revendications 1 à 3, **caractérisé en ce que** la liaison (31) entre la totalité des surfaces des deux corps de base (10, 20) est réalisée par soudage.

5. Procédé selon l'une des revendications 1 à 4, **caractérisé en ce que** la formation du canal (21) de pression dans la pièce de raccordement (2) et la libération de la membrane (11) de l'élément de sonde (1) s'effectuent dans un procédé en plusieurs étapes, en particulier par une combinaison de différentes opérations de forage, de fraisage et/ou d'électropolissage.
